(19) Europäisches Patentamt / European Patent Office / Office européen des brevets

(11) **EP 4 438 213 A1**

(12) **EUROPEAN PATENT APPLICATION**
published in accordance with Art. 153(4) EPC

(43) Date of publication:
**02.10.2024 Bulletin 2024/40**

(21) Application number: **21965653.5**

(22) Date of filing: **26.11.2021**

(51) International Patent Classification (IPC):
**B23H 1/00** (2006.01)      **B23H 7/02** (2006.01)
**B23H 7/20** (2006.01)

(52) Cooperative Patent Classification (CPC):
**B23H 1/00; B23H 7/02; B23H 7/20**

(86) International application number:
**PCT/JP2021/043384**

(87) International publication number:
**WO 2023/095282 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventors:
• **TAGUCHI, Haruka**
  **Minamitsuru-gun, Yamanashi 401-0597 (JP)**
• **SHIRAI, Kenichiro**
  **Minamitsuru-gun, Yamanashi 401-0597 (JP)**

(74) Representative: **Schmidt, Steffen J.**
**Wuesthoff & Wuesthoff**
**Patentanwälte und Rechtsanwalt PartG mbB**
**Schweigerstrasse 2**
**81541 München (DE)**

(54) **CONTROL DEVICE FOR WIRE ELECTRIC-DISCHARGE MACHINING MACHINE, AND CONTROL METHOD FOR WIRE ELECTRIC-DISCHARGE MACHINING MACHINE**

(57) In a control device (18) for a wire electric-discharge machining machine (10), if it has been determined that the length of a route defined by two blocks is equal to or less than the diameter of a wire electrode (12), a route shape determination unit (32) determines whether the shape of the route defined by the two blocks is a right corner or a left corner on the basis of the coordinates of three points established from origin points and end points of the two blocks. If it has been determined that the shape of the route is a left corner or a right corner, an inner/outer corner determination unit (36) determines whether the shape of the route is an inner corner or an outer corner on the basis of an offset direction.

FIG. 1

EP 4 438 213 A1

**Description**

TECHNICAL FIELD

The present invention relates to a control device for a wire electrical discharge machine (electric-discharge machining machine) and a control method for a wire electrical discharge machine.

BACKGROUND ART

In JP 2021-041475 A, a wire electrical discharge machine is disclosed. The wire electrical discharge machine performs machining by changing machining conditions in accordance with a path shape (a shape of a path) defined by a machining program. Thus, the machining accuracy with which the workpiece is machined is enhanced.

SUMMARY OF THE INVENTION

There is a case where a curved path shape may be defined by combining a plurality of blocks each defining an extremely short path. In this case, the machining shape cannot be determined from the movement command of each block. Therefore, the wire electrical discharge machine disclosed in JP 2021-041475 A has a problem that the machining accuracy with which the workpiece is machined is low.

The present invention has the object of solving the aforementioned problem.

A first aspect of the present invention is characterized by a control device for a wire electrical discharge machine that performs electrical discharge machining on a workpiece by applying a voltage between a wire electrode and the workpiece while relatively moving the wire electrode relative to the workpiece in accordance with a machining program defining a programmed path, the control device including: an infinitesimal-block determination unit configured to determine whether a length of a path defined by each of two consecutive blocks is equal to or less than a diameter of the wire electrode or not; a path shape determination unit configured to, when it is determined that the length of the path defined by each of the two consecutive blocks is equal to or less than the diameter of the wire electrode, determine whether a path shape defined by the two consecutive blocks is one of a right-hand corner that curves to right in a traveling direction of the wire electrode and a left-hand corner that curves to left in the traveling direction or not, based on coordinates of three points defined by start points and end points of the two consecutive blocks; an offset direction acquisition unit configured to acquire an offset direction in the two consecutive blocks, from the machining program; an inner/outer corner determination unit configured to, when the path shape is determined to be one of the left-hand corner and the right-hand corner, determine whether the path shape is an inner corner or an outer corner, based on the offset direction; and an electrical discharge machining control unit configured to control electrical discharge machining based on a determination result by the inner/outer corner determination unit.

A second aspect of the present invention is characterized by a control method for a wire electrical discharge machine that performs electrical discharge machining on a workpiece by applying a voltage between a wire electrode and the workpiece while relatively moving the wire electrode relative to the workpiece in accordance with a machining program defining a programmed path, the control method including: an infinitesimal-block determination step of determining whether a length of a path defined by each of two consecutive blocks is equal to or less than a diameter of the wire electrode or not; a path shape determination step of, when it is determined that the length of the path defined by each of the two consecutive blocks is equal to or less than the diameter of the wire electrode, determining whether a path shape defined by the two consecutive blocks is one of a right-hand corner that curves to right in a traveling direction of the wire electrode and a left-hand corner that curves to left in the traveling direction or not, based on coordinates of three points defined by start points and end points of the two consecutive blocks; an offset direction acquisition step of acquiring an offset direction in the two consecutive blocks, from the machining program; an inner/outer corner determination step of, when the path shape is determined to be one of the left-hand corner and the right-hand corner, determining whether the path shape is an inner corner or an outer corner, based on the offset direction; and an electrical discharge machining control step of controlling electrical discharge machining based on a determination result in the inner/outer corner determination step.

According to the present invention, the machining accuracy with which a workpiece is machined can be improved.

BRIEF DESCRIPTION OF DRAWINGS

FIG. 1 is a schematic diagram showing a wire electrical discharge machine;
FIG. 2 is a table showing a correspondence relation between a combination of G code indicating circular interpolation and G code indicating an offset direction, and an inner corner/outer corner;

FIG. 3 is a schematic diagram showing an example of a path having an outer corner shape;

FIG. 4 is a diagram for explaining a method of determining a path shape;

FIG. 5 is a diagram for explaining a method of determining a path shape;

FIG. 6 is a diagram for explaining a method of determining a path shape; and

FIG. 7 is a flowchart showing a process flow of a path shape determining process performed in a control device.

DETAILED DESCRIPTION OF THE INVENTION

[First Embodiment]

[Configuration of Wire Electrical Discharge Machine]

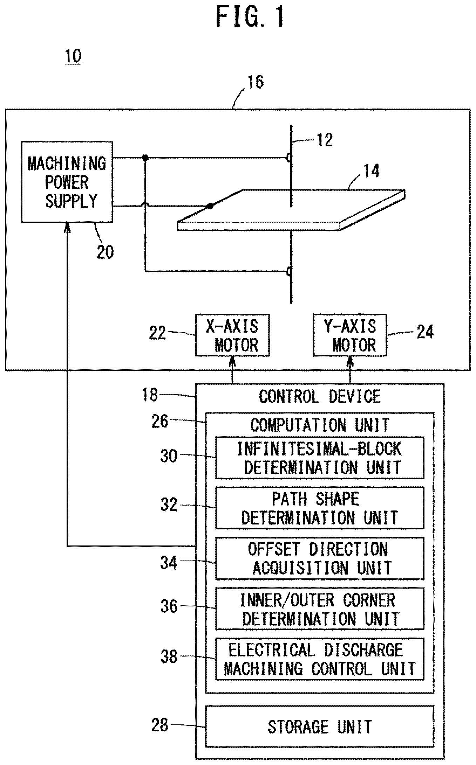

FIG. 1 is a schematic diagram showing a wire electrical discharge machine 10. The wire electrical discharge machine 10 applies a voltage between a wire electrode 12 and a workpiece 14 (hereinafter, may be referred to as an inter-electrode gap) to generate electrical discharge. Thus, the workpiece 14 is subjected to electrical discharge machining. The wire electrical discharge machine 10 includes a machine main body 16 and a control device 18.

The machine main body 16 includes a machining power supply 20, an X-axis motor 22, and a Y-axis motor 24. The machining power supply 20 applies a voltage to the inter-electrode gap. The X-axis motor 22 and the Y-axis motor 24 move a non-illustrated work table. The workpiece 14, which is fixed to the work table, moves together with the work table, to thereby cause relative movement of the wire electrode 12 with respect to the workpiece 14.

The control device 18 includes a computation unit 26 and a storage unit 28. The computation unit 26 includes a processor, for example, such as a CPU (Central Processing Unit), a GPU (Graphics Processing Unit), or the like. The computation unit 26 includes an infinitesimal-block determination unit 30, a path shape determination unit 32, an offset direction acquisition unit 34, an inner/outer corner determination unit 36, and an electrical discharge machining control unit 38. The infinitesimal-block determination unit 30, the path shape determination unit 32, the offset direction acquisition unit 34, the inner/outer corner determination unit 36, and the electrical discharge machining control unit 38 are realized by the computation unit 26 executing a program stored in the storage unit 28. At least part of the infinitesimal-block determination unit 30, the path shape determination unit 32, the offset direction acquisition unit 34, the inner/outer corner determination unit 36, and the electrical discharge machining control unit 38 may be implemented by an integrated circuit such as an ASIC (Application Specific Integrated Circuit) and a FPGA (Field-Programmable Gate Array). At least part of the infinitesimal-block determination unit 30, the path shape determination unit 32, the offset direction acquisition unit 34, the inner/outer corner determination unit 36, and the electrical discharge machining control unit 38 may be realized by an electronic circuit including discrete devices.

The storage unit 28 is constituted by a non-illustrated volatile memory, and a non-illustrated non-volatile memory. The volatile memory is, for example, a RAM (Random Access Memory), or the like. The non-volatile memory, for example, is a ROM (Read Only Memory), a flash memory, or the like. For example, data and the like are stored in the volatile memory. For example, programs, tables, maps, and the like are stored in the non-volatile memory. At least a portion of the storage unit 28 may be provided in the aforementioned processor, the integrated circuit, or the like. At least a portion of the storage unit 28 may be mounted on a device connected to the wire electrical discharge machine 10 via a network.

[Path of which Shape is Corner]

A path whose shape is a corner is usually defined by a block with a G-code "G02" or a G-code "G03" indicating circular interpolation. The path shape (the shape of the path) defined by the block with the G-code "G02" is a right-hand corner (right-hand curve). The path shape defined by the block with the G-code "G03" is a left-hand corner (left-hand curve). The right-hand corner has a path shape that curves to the right in the direction of travel (traveling direction) of the wire electrode 12. The left-hand corner has a path shape that curves to the left in the direction of travel (traveling direction) of the wire electrode 12.

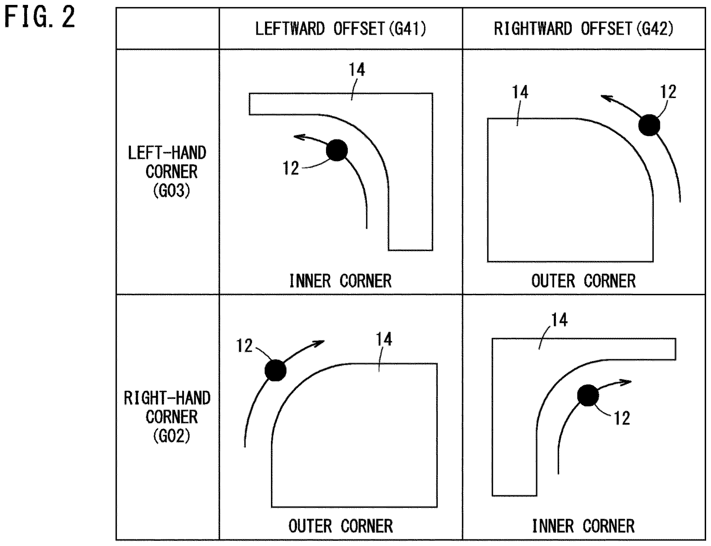

In this case, it is possible to determine whether the path shape is an inner corner or an outer corner, based on a combination of the G code indicating circular interpolation and a G code indicating an offset direction. FIG. 2 is a table showing a correspondence relation between a combination of the G code indicating circular interpolation and the G code indicating an offset direction, and the inner corner/outer corner. The inner corner has a path shape in which the machined surface of the workpiece 14 after machining is convex toward the inside of the workpiece 14. The outer corner has a path shape in which the machined surface of the workpiece 14 after machining is convex toward the outside of the workpiece 14.

As shown in FIG. 2, the path shape is determined to be an inner corner, by a combination of the G code "G03" indicating a left-hand corner and the G code "G41" indicating a leftward offset. As shown in FIG. 2, the path shape is determined to be an outer corner, by a combination of the G code "G03" indicating a left-hand corner and the G code "G42" indicating a rightward offset. As shown in FIG. 2, the path shape is determined to be an outer corner, by a combination of the G code "G02" indicating a right-hand corner and the G code "G41" indicating a leftward offset. As shown in FIG. 2, the path shape is determined to be an inner corner, by a combination of the G code "G02" indicating a right-hand corner and the G code "G42" indicating a rightward offset.

The electrical discharge machining control unit 38 adjusts the machining conditions according to the path shape. The electrical discharge machining control unit 38 outputs command values to the machining power supply 20, the X-axis motor 22, the Y-axis motor 24, and the like, based on the adjusted machining conditions. Thus, the electrical discharge machining of the workpiece 14 is controlled. Specifically, the electrical discharge machining control unit 38 controls the machining speed, the number of times of application, and the like, according to the path shape. The machining speed is a relative movement speed of the wire electrode 12 relative to the workpiece 14. The number of times of application is the number of times that a voltage is applied to the inter-electrode gap per unit time.

For example, when the path shape is an inner corner, the electrical discharge machining control unit 38 decreases the machining speed, compared to when the path shape is a straight line. When the path shape is an inner corner, the electrical discharge machining control unit 38 decreases the machining speed as the curvature of the path shape increases. When the path shape is an inner corner, the electrical discharge machining control unit 38 increases the number of times of application, compared to when the path shape is a straight line. When the path shape is an inner corner, the electrical discharge machining control unit 38 increases the number of times of application as the curvature of the path shape increases.

For example, when the path shape is an outer corner, the electrical discharge machining control unit 38 increases the machining speed, compared to when the path shape is a straight line. When the path shape is an outer corner, the electrical discharge machining control unit 38 increases the machining speed as the curvature of the path shape decreases. When the path shape is an outer corner, the electrical discharge machining control unit 38 reduces the number of times of application, compared to when the path shape is a straight line. When the path shape is an outer corner, the electrical discharge machining control unit 38 reduces the number of times of application as the curvature of the path shape becomes smaller.

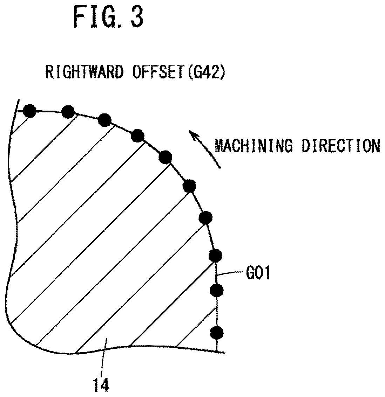

FIG. 3 is a schematic diagram illustrating an example of a path having an outer corner shape. The path shown in FIG. 3 is defined by a plurality of blocks having a G code "G01" indicating linear interpolation. The length of the path defined by each block is equal to or less than the diameter of the wire electrode 12. Hereinafter, a block having the length of the defined path that is equal to or less than the diameter of the wire electrode 12 may be referred to as an infinitesimal block. Further, the G code "G42" indicating the rightward offset is assigned to each block defining the path shown in FIG. 3.

The path shape shown in FIG. 3 is an outer corner. However, since the G code assigned to each block is "G01" indicating linear interpolation, the electrical discharge machining control unit 38 determines that the path shape is a straight line. Thus, the electrical discharge machining control unit 38 adjusts the machining conditions to those for a case where the path shape is a straight line, and performs electrical discharge machining. As a result, the accuracy of the machined surface of the workpiece 14 after machining may be deteriorated.

A path shape equivalent to that of FIG. 3 can also be defined from a plurality of infinitesimal blocks having the G-code "G02" indicating circular interpolation of the right-hand corner. The G code "G42" indicating the rightward offset is set in each block.

The path shape shown in FIG. 3 is an outer corner. However, since the G code assigned to each block is "G02" indicating circular interpolation of the right-hand corner and the G code "G42" indicating the rightward offset is further assigned to each block, the electrical discharge machining control unit 38 determines that the path shape is an inner corner. Thus, the electrical discharge machining control unit 38 adjusts the machining conditions to those for the case where the path shape is an inner corner, and performs electrical discharge machining. As a result, the accuracy of the machined surface of the workpiece 14 after machining may be deteriorated.

A path shape equivalent to that of FIG. 3 can also be defined from a plurality of infinitesimal blocks having the G code "G03" indicating circular interpolation of the left-hand corner. The G code "G42" indicating the rightward offset is set in each block.

The path shape shown in FIG. 3 is an outer corner. Since the G code assigned to each block is "G03" indicating circular interpolation of the left-hand corner and the G code "G42" indicating the rightward offset is further assigned to each block, the electrical discharge machining control unit 38 determines that the path shape is an outer corner. Thus, the electrical discharge machining control unit 38 adjusts the machining conditions to those for the case where the path shape is an outer corner, and performs electrical discharge machining. However, the curvature of the path shape of the outer corner shown in FIG. 3 cannot be determined from the G code of each block. As a result, the accuracy of the machined surface of the workpiece 14 after machining may be deteriorated.

As such, the path shape determination unit 32 of the present embodiment determines the path shape based on the coordinates of three points defined by the start points and the end points of two consecutive blocks. Specifically, the path shape determination unit 32 determines the path shape by a method described below.

[Determination Method (1)]

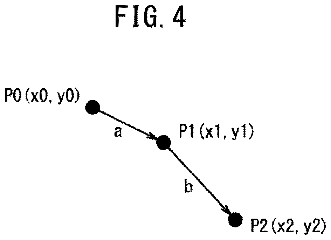

FIG. 4 is a diagram for explaining a method of determining a path shape. In the determination method (1), the path shape determination unit 32 determines the path shape based on the cross product of the vector from the start point to the end point of the first block and the vector from the start point to the end point of the second block, of the consecutive first and second blocks.

The start point of the first block is denoted by P0, the end point of the first block is denoted by P1, and a vector from the start point P0 to the end point P1 is denoted by a. Suppose that the coordinates of the start point P0 are (x0, y0), and the coordinates of the end point P1 are (x1, y1). The start point of the second block, which is the block next to the first block, coincides with the end point P1 of the first block. The end point of the second block is denoted by P2, and a vector from the start point P1 to the end point P2 is denoted by b. Suppose that the coordinates of the end point P2 are (x2, y2). The cross product a×b of the vector a and the vector b is obtained by the following equation.

$$ a \times b = (x1 - x0)(y2 - y1) - (y1 - y0)(x2 - x1) \cdots (1) $$

When the value of the cross product of the vector a and the vector b is 0, the path shape determination unit 32 determines that the path shape defined by the first block and the second block is a straight line. When the value of the cross product of the vector a and the vector b is positive, the path shape determination unit 32 determines that the path shape defined by the first block and the second block is a left-hand corner. When the value of the cross product of the vector a and the vector b is negative, the path shape determination unit 32 determines that the path shape defined by the first block and the second block is a right-hand corner. The path shape determination unit 32 determines that the curvature is greater as the absolute value of the cross product of the vector a and the vector b is greater.

[Determination Method (2)]

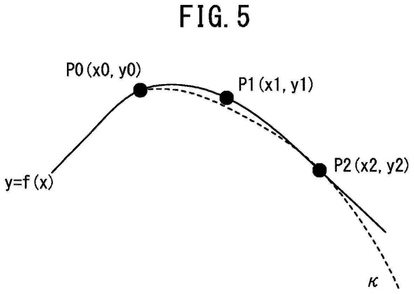

FIG. 5 is a diagram for explaining a method of determining a path shape. In the determination method (2), the path shape determination unit 32 determines the path shape based on the curvature of a line passing through the start points and the end points of the continuous first block and second block.

The start point of the first block is denoted by P0, and the end point of the first block is denoted by P1. Suppose that the coordinates of the start point P0 are (x0, y0), and the coordinates of the end point P1 are (x1, y1). The start point of the second block, which is the block next to the first block, coincides with the end point P1 of the first block. The end point of the second block is denoted by P2. Suppose that the coordinates of the end point P2 are (x2, y2).

The path shape determination unit 32 sets a function f(x) indicating a line passing through the start points and the end points of the first block and the second block. The function f(x) is a twice-differentiable function. That is, the function f(x) is a quadratic or higher-order polynomial function or a trigonometric function. The number of coefficients of the function f(x) is three or fewer. The curvature $\kappa$ of the line passing through the start points and the end points of the first block and the second block is obtained by the following equation.

$$ \kappa = \frac{f''(x)}{(1 + f'(x)^2)^{\frac{3}{2}}} \cdots (2) $$

When the value of the curvature $\kappa$ is 0, the path shape determination unit 32 determines that the path shape defined by the first block and the second block is a straight line. When the value of the curvature $\kappa$ is positive, the path shape determination unit 32 determines that the path shape defined by the first block and the second block is a left-hand corner. When the value of the curvature $\kappa$ is negative, the path shape determination unit 32 determines that the path shape defined by the first block and the second block is a right-hand corner.

[Determination Method (3)]

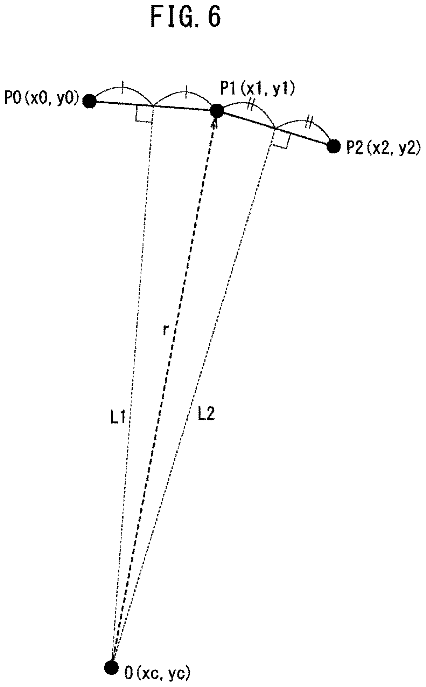

FIG. 6 is a diagram for explaining a method of determining a path shape. In the determination method (3), the path shape determination unit 32 determines the path shape based on the perpendicular bisector of the line segment connecting the start point and the end point of the first block and the perpendicular bisector of the line segment connecting the start point and the end point of the second block, in the continuous first and second blocks.

The start point of the first block is denoted by P0, and the end point of the first block is denoted by P1. Suppose that the coordinates of the start point P0 are (x0, y0), and the coordinates of the end point P1 are (x1, y1). The start point of the second block, which is the block next to the first block, coincides with the end point P1 of the first block. The end point of the second block is denoted by P2. Suppose that the coordinates of the end point P2 are (x2, y2).

The path shape determination unit 32 obtains the perpendicular bisector L1 of a line segment connecting the start point P0 and the end point P1 of the first block. The path shape determination unit 32 obtains the perpendicular bisector L2 of a line segment connecting the start point P1 and the end point P2 of the second block. Each of the perpendicular bisector L1 and the perpendicular bisector L2 can be expressed by the following equations.

$$L1: a1 \cdot x + b1 \cdot y + c1 = 0 \cdots (3)$$

$$L2: a2 \cdot x + b2 \cdot y + c2 = 0 \cdots (4)$$

The coefficient a1 and the coefficient b1 of the perpendicular bisector L1 and the coefficient a2 and the coefficient b2 of the perpendicular bisector L2 are used to obtain a determination value J. The determination value J is obtained by the following equation.

$$J = a2 \cdot b1 - a1 \cdot b2 \cdots (5)$$

When the determination value J is 0, the path shape determination unit 32 determines that the path shape defined by the first block and the second block is a straight line. When the determination value J is positive, the path shape determination unit 32 determines that the path shape defined by the first block and the second block is a left-hand corner. When the determination value J is negative, the path shape determination unit 32 determines that the path shape defined by the first block and the second block is a right-hand corner.

When the path shape defined by the first block and the second block is a left-hand corner or a right-hand corner, the curvature $\kappa$ is obtained by the following equation.

$$\kappa = \frac{1}{r} = \frac{1}{\sqrt{(x1-xc)^2 + (y1-yc)^2}} \cdots (6)$$

In the above equation, xc and yc are coordinates at the intersection O of the perpendicular bisector L1 and the perpendicular bisector L2.

[Path Shape Determination]

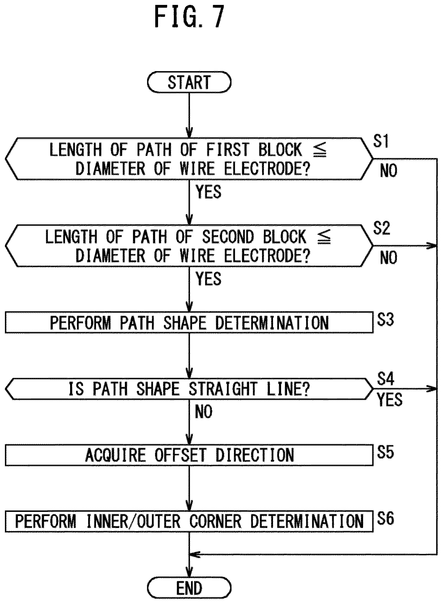

FIG. 7 is a flowchart showing a process flow of a path shape determining process performed in the control device 18. The path shape determining process is repeatedly executed in a predetermined cycle while the wire electrical discharge machine 10 is performing electrical discharge machining. In the following description, the first block indicates a block to be processed next among the blocks of the machining program. The second block indicates a block to be processed next to the first block.

In step S1, the infinitesimal-block determination unit 30 determines whether the length of the path of the first block is equal to or less than the diameter of the wire electrode 12 or not. If the length of the path of the first block is equal to or less than the diameter of the wire electrode 12, the process proceeds to step S2. When the length of the path of the first block is longer than the diameter of the wire electrode 12, the path shape determination is ended.

In step S2, the infinitesimal-block determination unit 30 determines whether the length of the path of the second block is equal to or less than the diameter of the wire electrode 12 or not. If the length of the path of the second block is equal to or less than the diameter of the wire electrode 12, the process proceeds to step S3. When the length of the path of the second block is longer than the diameter of the wire electrode 12, the path shape determination is ended.

In step S3, the path shape determination unit 32 determines the path shape defined by the first block and the second block. The path shape determination unit 32 determines whether the path shape is a straight line, a left-hand corner, or a right-hand corner. Thereafter, the process transitions to step S4.

In step S4, the path shape determination unit 32 determines whether or not the path shape defined by the first block and the second block is a straight line. When the path shape is a straight line, the path shape determination is ended. If the path shape is not a straight line, the process proceeds to step S5.

In step S5, the offset direction acquisition unit 34 acquires an offset direction in the first block and the second block. Thereafter, the process transitions to step S6.

In step S6, the inner/outer corner determination unit 36 determines whether the path shape defined by the first block and the second block is an inner corner or an outer corner. Thereafter, the path shape determination is ended.

The electrical discharge machining control unit 38 adjusts the machining conditions according to the result of the path shape determination. When the result of the path shape determination is either an inner corner or an outer corner, the electrical discharge machining control unit 38 adjusts the machining conditions in accordance with the curvature of the path shape. The electrical discharge machining control unit 38 outputs command values to the machining power supply 20, the X-axis motor 22, the Y-axis motor 24, and the like, based on the adjusted machining conditions. Thus, the electrical discharge machining of the workpiece 14 is controlled. The electrical discharge machining control unit 38 may adjust items other than the machining conditions in accordance with the result of the path shape determination.

[Operation and Effect]

When the path shape is defined by a plurality of infinitesimal blocks, the control device 18 may erroneously determine the path shape defined by the plurality of infinitesimal blocks. If the path shape is determined erroneously, the electrical discharge machining control unit 38 cannot adjust the machining conditions appropriately, and the accuracy of the machined surface of the workpiece 14 may consequently deteriorate.

In the control device 18 of the present embodiment, the infinitesimal-block determination unit 30 determines whether the length of the path defined by each of the two continuous blocks is equal to or less than the diameter of the wire electrode 12 or not. When it is determined that the length of the path defined by each of the two consecutive blocks is equal to or less than the diameter of the wire electrode 12, the path shape determination unit 32 determines whether the path shape is one of a right-hand corner and a left-hand corner or not. The path shape determination unit 32 performs the above determination based on the coordinates of three points determined from the start points and the end points of the two consecutive blocks. The offset direction acquisition unit 34 acquires the offset direction in the two consecutive blocks, from the machining program. Thereafter, when the path shape is determined to be one of a left-hand corner and a right-hand corner, the inner/outer corner determination unit 36 determines whether the path shape is an inner corner or an outer corner based on the offset direction. The electrical discharge machining control unit 38 controls electrical discharge machining based on the determination result in the inner/outer corner determination unit 36. This makes it possible to improve the accuracy of the machined surface of the workpiece 14 after machining, in the path of the inner corner or the outer corner defined by the plurality of infinitesimal blocks.

In the control device 18 of the present embodiment, the path shape determination unit 32 determines the path shape based on the cross product of two vectors obtained from two consecutive blocks. The two vectors are a vector from the start point to the end point of one of the two consecutive blocks and a vector from the start point to the end point of the other of the two consecutive blocks. Thus, the path shape defined by the plurality of infinitesimal blocks can be determined.

In the control device 18 of the present embodiment, the path shape determination unit 32 determines the path shape based on a function indicating a line passing through three points determined from the start points and the end points of two consecutive blocks. The function is a function having three or fewer coefficients. The function is a twice-differentiable function. Thus, the path shape defined by the plurality of infinitesimal blocks can be determined.

In the control device 18 of the present embodiment, the path shape determination unit 32 determines the path shape based on the perpendicular bisector of the line segment connecting the start point and the end point of each of two consecutive blocks. More specifically, the path shape determination unit 32 determines the path shape based on the coefficients of the mathematical expression indicating the perpendicular bisector of the line segment connecting the start point and the end point of one of the two consecutive blocks and the coefficients of the mathematical expression indicating the perpendicular bisector of the line segment connecting the start point and the end point of the other of the two consecutive blocks. Thus, the path shape defined by the plurality of infinitesimal blocks can be determined.

It should be noted that the present invention is not limited to the above-described embodiments, and various configurations can be adopted therein without departing from the essence and gist of the present invention.

[Invention Obtained from Embodiment]

The invention that can be grasped from the above embodiments is described below.

The control device (18) for the wire electrical discharge machine (10) that performs electrical discharge machining on the workpiece (14) by applying a voltage between the wire electrode (12) and the workpiece while relatively moving the wire electrode relative to the workpiece in accordance with a machining program defining the programmed path, includes: the infinitesimal-block determination unit (30) configured to determine whether the length of the path defined by each of two consecutive blocks is equal to or less than the diameter of the wire electrode or not; the path shape determination unit (32) configured to, when it is determined that the length of the path defined by each of the two consecutive blocks is equal to or less than the diameter of the wire electrode, determine whether the path shape defined by the two consecutive blocks is one of a right-hand corner that curves to the right in the traveling direction of the wire electrode and a left-hand corner that curves to the left in the traveling direction or not, based on the coordinates of three points defined by the start points and the end points of the two consecutive blocks; the offset direction acquisition unit (34) configured to acquire the offset direction in the two consecutive blocks, from the machining program; the inner/outer corner determination unit (36) configured to, when the path shape is determined to be one of the left-hand corner and the right-hand corner, determine whether the path shape is an inner corner or an outer corner, based on the offset direction; and the electrical discharge machining control unit (38) configured to control electrical discharge machining based on the determination result by the inner/outer corner determination unit. This makes it possible to improve the accuracy of the machined surface of the workpiece after machining, in the path of the inner corner or the outer corner defined by the plurality of infinitesimal blocks.

In the control device for the wire electrical discharge machine, the path shape determination unit may determine the path shape, based on the cross product of the vector from the start point to the end point of one of the two consecutive blocks and the vector from the start point to the end point of another of the two consecutive blocks. With this configuration, the path shape defined by the plurality of infinitesimal blocks can be determined.

In the control device for the wire electrical discharge machine, the path shape determination unit may determine the path shape, based on the curvature obtained from a function indicating the line passing through the three points defined by the start points and the end points of the two consecutive blocks, the function having three or fewer coefficients. With this configuration, the path shape defined by the plurality of infinitesimal blocks can be determined.

In the control device for the wire electrical discharge machine, the function may be a twice-differentiable function. With this configuration, the path shape defined by the plurality of infinitesimal blocks can be determined.

In the control device for the wire electrical discharge machine, the path shape determination unit may determine the path shape, based on the coefficients of the mathematical expression indicating the perpendicular bisector of the line segment connecting the start point and the end point of one of the two consecutive blocks and the coefficients of the mathematical expression indicating the perpendicular bisector of the line segment connecting the start point and the end point of another of the two consecutive blocks. With this configuration, the path shape defined by the plurality of infinitesimal blocks can be determined.

The control method for the wire electrical discharge machine that performs electrical discharge machining on the workpiece by applying a voltage between the wire electrode and the workpiece while relatively moving the wire electrode relative to the workpiece in accordance with the machining program defining the programmed path, includes: an infinitesimal-block determination step of determining whether the length of the path defined by each of two consecutive blocks is equal to or less than the diameter of the wire electrode or not; a path shape determination step of, when it is determined that the length of the path defined by each of the two consecutive blocks is equal to or less than the diameter of the wire electrode, determining whether the path shape defined by the two consecutive blocks is one of a right-hand corner that curves to the right in the traveling direction of the wire electrode and a left-hand corner that curves to the left in the traveling direction or not, based on the coordinates of the three points defined by the start points and the end points of the two consecutive blocks; an offset direction acquisition step of acquiring the offset direction in the two consecutive blocks, from the machining program; an inner/outer corner determination step of, when the path shape is determined to be one of the left-hand corner and the right-hand corner, determining whether the path shape is an inner corner or an outer corner, based on the offset direction; and an electrical discharge machining control step of controlling electrical discharge machining based on the determination result in the inner/outer corner determination step. This makes it possible to improve the accuracy of the machined surface of the workpiece after machining, in the path of the inner corner or the outer corner defined by the plurality of infinitesimal blocks.

In the control method for the wire electrical discharge machine, the path shape determination step may include determining the path shape, based on the cross product of the vector from the start point to the end point of one of the two consecutive blocks and the vector from the start point to the end point of another of the two consecutive blocks. With this configuration, the path shape defined by the plurality of infinitesimal blocks can be determined.

In the control method for the wire electrical discharge machine, the path shape determination step may include determining the path shape, based on the curvature obtained from the function indicating the line passing through the three points defined by the start points and the end points of the two consecutive blocks, the function having three or fewer coefficients. With this configuration, the path shape defined by the plurality of infinitesimal blocks can be determined.

In the control method for the wire electrical discharge machine, the function may be a twice-differentiable function. With this configuration, the path shape defined by the plurality of infinitesimal blocks can be determined.

In the above control method for the wire electrical discharge machine, the path shape determination step may include determining the path shape, based on the coefficients of the mathematical expression indicating the perpendicular bisector of the line segment connecting the start point and the end point of one of the two consecutive blocks and the coefficients of the mathematical expression indicating the perpendicular bisector of the line segment connecting the start point and the end point of another of the two consecutive blocks. With this configuration, the path shape defined by the plurality of infinitesimal blocks can be determined.

Reference Signs List

10: wire electrical discharge machine
12: wire electrode
14: workpiece
18: control device
30: infinitesimal-block determination unit
32: path shape determination unit
34: offset direction acquisition unit
36: inner/outer corner determination unit
38: electrical discharge machining control unit

**Claims**

1. A control device (18) for a wire electrical discharge machine (10) that performs electrical discharge machining on a workpiece (14) by applying a voltage between a wire electrode (12) and the workpiece while relatively moving the wire electrode relative to the workpiece in accordance with a machining program defining a programmed path, the control device comprising:

   an infinitesimal-block determination unit (30) configured to determine whether a length of a path defined by each of two consecutive blocks is equal to or less than a diameter of the wire electrode or not;
   a path shape determination unit (32) configured to, when it is determined that the length of the path defined by each of the two consecutive blocks is equal to or less than the diameter of the wire electrode, determine whether a path shape defined by the two consecutive blocks is one of a right-hand corner that curves to right in a traveling direction of the wire electrode and a left-hand corner that curves to left in the traveling direction or not, based on coordinates of three points defined by start points and end points of the two consecutive blocks;
   an offset direction acquisition unit (34) configured to acquire an offset direction in the two consecutive blocks, from the machining program;
   an inner/outer corner determination unit (36) configured to, when the path shape is determined to be one of the left-hand corner and the right-hand corner, determine whether the path shape is an inner corner or an outer corner, based on the offset direction; and
   an electrical discharge machining control unit (38) configured to control electrical discharge machining based on a determination result by the inner/outer corner determination unit.

2. The control device for the wire electrical discharge machine according to claim 1, wherein
   the path shape determination unit determines the path shape, based on a cross product of a vector from the start point to the end point of one of the two consecutive blocks and a vector from the start point to the end point of another of the two consecutive blocks.

3. The control device for the wire electrical discharge machine according to claim 1, wherein
   the path shape determination unit determines the path shape, based on a curvature obtained from a function indicating a line passing through the three points defined by the start points and the end points of the two consecutive blocks, the function having three or fewer coefficients.

4. The control device for the wire electrical discharge machine according to claim 3, wherein
   the function is a twice-differentiable function.

5. The control device for the wire electrical discharge machine according to claim 1, wherein
   the path shape determination unit determines the path shape, based on coefficients of a mathematical expression indicating a perpendicular bisector of a line segment connecting the start point and the end point of one of the two consecutive blocks and coefficients of a mathematical expression indicating a perpendicular bisector of a line segment connecting the start point and the end point of another of the two consecutive blocks.

6. A control method for a wire electrical discharge machine that performs electrical discharge machining on a workpiece by applying a voltage between a wire electrode and the workpiece while relatively moving the wire electrode relative to the workpiece in accordance with a machining program defining a programmed path, the control method comprising:

an infinitesimal-block determination step of determining whether a length of a path defined by each of two consecutive blocks is equal to or less than a diameter of the wire electrode or not;

a path shape determination step of, when it is determined that the length of the path defined by each of the two consecutive blocks is equal to or less than the diameter of the wire electrode, determining whether a path shape defined by the two consecutive blocks is one of a right-hand corner that curves to right in a traveling direction of the wire electrode and a left-hand corner that curves to left in the traveling direction or not, based on coordinates of three points defined by start points and end points of the two consecutive blocks;

an offset direction acquisition step of acquiring an offset direction in the two consecutive blocks, from the machining program;

an inner/outer corner determination step of, when the path shape is determined to be one of the left-hand corner and the right-hand corner, determining whether the path shape is an inner corner or an outer corner, based on the offset direction; and

an electrical discharge machining control step of controlling electrical discharge machining based on a determination result in the inner/outer corner determination step.

7. The control method for the wire electrical discharge machine according to claim 6, wherein the path shape determination step comprises determining the path shape, based on a cross product of a vector from the start point to the end point of one of the two consecutive blocks and a vector from the start point to the end point of another of the two consecutive blocks.

8. The control method for the wire electrical discharge machine according to claim 6, wherein the path shape determination step comprises determining the path shape, based on a curvature obtained from a function indicating a line passing through the three points defined by the start points and the end points of the two consecutive blocks, the function having three or fewer coefficients.

9. The control method for the wire electrical discharge machine according to claim 8, wherein the function is a twice-differentiable function.

10. The control method for the wire electrical discharge machine according to claim 6, wherein the path shape determination step comprises determining the path shape, based on coefficients of a mathematical expression indicating a perpendicular bisector of a line segment connecting the start point and the end point of one of the two consecutive blocks and coefficients of a mathematical expression indicating a perpendicular bisector of a line segment connecting the start point and the end point of another of the two consecutive blocks.

# FIG. 1

MACHINING POWER SUPPLY

X-AXIS MOTOR

Y-AXIS MOTOR

CONTROL DEVICE

COMPUTATION UNIT

INFINITESIMAL-BLOCK DETERMINATION UNIT

PATH SHAPE DETERMINATION UNIT

OFFSET DIRECTION ACQUISITION UNIT

INNER/OUTER CORNER DETERMINATION UNIT

ELECTRICAL DISCHARGE MACHINING CONTROL UNIT

STORAGE UNIT

FIG. 2

| | LEFTWARD OFFSET (G41) | RIGHTWARD OFFSET (G42) |
|---|---|---|
| LEFT-HAND CORNER (G03) | <br>INNER CORNER | <br>OUTER CORNER |
| RIGHT-HAND CORNER (G02) | <br>OUTER CORNER | <br>INNER CORNER |

EP 4 438 213 A1

# FIG. 3

RIGHTWARD OFFSET(G42)

MACHINING DIRECTION

G01

14

# F IG. 4

P0 (x0, y0)

a

P1 (x1, y1)

b

P2 (x2, y2)

# F I G. 5

P0 (x0, y0)

P1 (x1, y1)

P2 (x2, y2)

y=f (x)

$\kappa$

# FIG. 6

# FIG. 7

START

LENGTH OF PATH OF FIRST BLOCK $\leqq$ DIAMETER OF WIRE ELECTRODE? S1

NO

YES

LENGTH OF PATH OF SECOND BLOCK $\leqq$ DIAMETER OF WIRE ELECTRODE? S2

NO

YES

PERFORM PATH SHAPE DETERMINATION S3

IS PATH SHAPE STRAIGHT LINE? S4

YES

NO

ACQUIRE OFFSET DIRECTION S5

PERFORM INNER/OUTER CORNER DETERMINATION S6

END

| INTERNATIONAL SEARCH REPORT | International application No. |
|---|---|
| | **PCT/JP2021/043384** |

**A.      CLASSIFICATION OF SUBJECT MATTER**

*B23H 1/00*(2006.01)i; *B23H 7/02*(2006.01)i; *B23H 7/20*(2006.01)i
FI:      B23H1/00 A; B23H7/02 R; B23H7/20

According to International Patent Classification (IPC) or to both national classification and IPC

**B.      FIELDS SEARCHED**

Minimum documentation searched (classification system followed by classification symbols)

B23H1/00; B23H7/02; B23H7/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
|---|---|---|
| A | JP 62-069302 A (MATSUSHITA ELECTRIC WORKS LTD) 30 March 1987 (1987-03-30) p. 3, upper left column, line 20 to upper right column, line 5, p. 4, upper right column, line 16 to lower left column, line 18, fig. 4 | 1-10 |
| A | JP 2012-035363 A (FANUC LTD) 23 February 2012 (2012-02-23) paragraph [0020] | 1-10 |
| A | JP 2015-123544 A (FANUC LTD) 06 July 2015 (2015-07-06) paragraphs [0032]-[0036], fig. 4-5 | 1-10 |
| A | JP 2021-041475 A (FANUC LTD) 18 March 2021 (2021-03-18) paragraphs [0034]-[0038], fig. 4-6 | 1-10 |

☐ Further documents are listed in the continuation of Box C.      ☑ See patent family annex.

| *      Special categories of cited documents: | "T"      later document published after the international filing date or priority date and not in conflict with the application but cited to understand the principle or theory underlying the invention |
|---|---|
| "A"      document defining the general state of the art which is not considered to be of particular relevance | |
| "E"      earlier application or patent but published on or after the international filing date | "X"      document of particular relevance; the claimed invention cannot be considered novel or cannot be considered to involve an inventive step when the document is taken alone |
| "L"      document which may throw doubts on priority claim(s) or which is cited to establish the publication date of another citation or other special reason (as specified) | "Y"      document of particular relevance; the claimed invention cannot be considered to involve an inventive step when the document is combined with one or more other such documents, such combination being obvious to a person skilled in the art |
| "O"      document referring to an oral disclosure, use, exhibition or other means | "&"      document member of the same patent family |
| "P"      document published prior to the international filing date but later than the priority date claimed | |

| Date of the actual completion of the international search | Date of mailing of the international search report |
|---|---|
| **24 January 2022** | **01 February 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

INTERNATIONAL SEARCH REPORT
Information on patent family members

International application No.

**PCT/JP2021/043384**

| Patent document cited in search report | | | Publication date (day/month/year) | Patent family member(s) | | | Publication date (day/month/year) |
|---|---|---|---|---|---|---|---|
| JP | 62-069302 | A | 30 March 1987 | (Family: none) | | | |
| JP | 2012-035363 | A | 23 February 2012 | US paragraph [0045] EP CN | 2012/0031879 2415546 102371409 | A1 A1 A | |
| JP | 2015-123544 | A | 06 July 2015 | US paragraphs [0052]-[0058], fig. 4-5 EP CN KR | 2015/0183039 2889101 104741714 10-2015-0076104 | A1 A2 A A | |
| JP | 2021-041475 | A | 18 March 2021 | US paragraphs [0055]-[0059], fig. 4-6 CN | 2021/0069809 112453606 | A1 A | |

Form PCT/ISA/210 (patent family annex) (January 2015)

**EP 4 438 213 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021041475 A